# EUROPEAN PATENT APPLICATION

(11) **EP 4 788 010 A1**
(43) Date of publication of application: **05.08.2026**
(21) Application number: 23953576.8
(22) Date of filing: 27.09.2023
(51) Int. Cl.: H04W 72/12

(54) **INFORMATION PROCESSING METHOD, NETWORK DEVICE, TERMINAL, COMMUNICATION SYSTEM AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Gunzelmann, Rainer
(86) International application number: PCT/CN2023/122325
(87) International publication number: WO 2025/065424

(57) **Abstract**

Embodiments of the present application provide an information processing method, a network device, a terminal, a communication system and a storage medium. The information processing method comprises: a network device sends first information, wherein the first information is used for a terminal to send a DSR or cancel sending of a DSR. In this way, a terminal can determine whether to send a DSR or cancel the sending of a DSR, so that whether to cancel a triggered DSR can be realized, and the network device and the terminal can have a consistent understanding on whether to cancel the sending of the DSR.

## Description

### FIELD

The present disclosure relates to the field of communication technologies, and more particularly to an information processing method, a network device, a terminal, a communication system and a storage medium.

### BACKGROUND

Currently, for emergency scheduling during data transmission, a terminal may introduce reporting of a delay status report (DSR). However, in some scenarios, such as packet loss, the reporting of the DSR may not be necessary.

### SUMMARY

Embodiments of the present disclosure aim to address the problem of whether to cancel triggered DSR transmission.

According to a first aspect of embodiments of the present disclosure, an information processing method is provided, and the method includes: transmitting by a network device first information to a terminal, where the first information is configured to instruct the terminal to transmit a DSR or cancel transmission of a DSR.

According to a second aspect of embodiments of the present disclosure, an information processing method is provided, and the method includes: receiving by a terminal first information transmitted by a network device, where the first information is configured to instruct the terminal to transmit a DSR or cancel transmission of a DSR.

According to a third aspect of embodiments of the present disclosure, a network device is provided, and the network device includes: a first transceiver module configured to transmit first information to a terminal, where the first information is configured to instruct the terminal to transmit a DSR or cancel transmission of a DSR.

According to a fourth aspect of embodiments of the present disclosure, a terminal is provided, and the terminal includes: a second transceiver module configured to receive first information transmitted by a network device, where the first information is configured to instruct the terminal to transmit a DSR or cancel transmission of a DSR.

According to a fifth aspect of embodiments of the present disclosure, a network device is provided, and the network device includes: one or more processors, where the network device is configured to perform optional implementations of the first aspect.

According to a sixth aspect of embodiments of the present disclosure, a terminal is provided, and the terminal includes: one or more processors, where the terminal is configured to perform optional implementations of the second aspect.

According to a seventh aspect of embodiments of the present disclosure, a communication system is provided, and the communication system includes: a network device and a terminal, where the network device is configured to perform the method according to optional implementations of the first aspect, and the terminal is configured to perform the method according to optional implementations of the second aspect.

According to an eighth aspect of embodiments of the present disclosure, a storage medium is provided, and the storage medium stores instructions, which are configured to, when executed on a communication device, cause the communication device to perform the methods according to optional implementations of the first aspect and/or the second aspect.

The embodiments of the present disclosure may determine whether to cancel the triggered DSR.

### BRIEF DESCRIPTION OF THE DRAWINGS

In order to more clearly illustrate the technical solutions in the embodiments of the present disclosure, the drawings required for describing the embodiments are introduced below. The following drawings only show some embodiments of the present disclosure and do not impose specific limitations on the protection scope of the present disclosure.
FIG. 1 is a schematic diagram of an information processing system according to an embodiment of the present disclosure.
FIG. 2 is an interactive schematic diagram of an information processing method according to an embodiment of the present disclosure.
FIG. 3A is a flowchart of an information processing method according to an embodiment of the present disclosure.
FIG. 3B is a flowchart of an information processing method according to an embodiment of the present disclosure.
FIG. 4A is a flowchart of an information processing method according to an embodiment of the present disclosure.
FIG. 4B is a flowchart of an information processing method according to an embodiment of the present disclosure.
FIG. 5A is a block diagram of a network device according to an embodiment of the present disclosure.
FIG. 5B is a block diagram of a terminal according to an embodiment of the present disclosure.
FIG. 6A is a block diagram of a communication device according to an embodiment of the present disclosure.
FIG. 6B is a block diagram of a chip according to an embodiment of the present disclosure.

### DETAILED DESCRIPTION

Embodiments of the present disclosure provide an information processing method, a network device, a terminal, a communication system, and a storage medium.

In a first aspect, embodiments of the present disclosure provide an information processing method, and the method includes: transmitting by a network device first information to a terminal, where the first information is configured to instruct the terminal to transmit a DSR or cancel transmission of a DSR.

In the above embodiments, the network device may transmit the first information to enable the terminal to determine whether to transmit the DSR or cancel the transmission of the DSR. In this way, whether to cancel the triggered DSR may be determined, so that the network device and the terminal have a consistent understanding of whether to cancel the transmission of the DSR.

In combination with some embodiments of the first aspect, in some embodiments, the first information indicates one of: activating a DSR transmission function; or, deactivating the DSR transmission function, where activating the DSR transmission function includes: configuring the terminal to transmit the DSR or enabling the terminal to transmit the DSR; and deactivating the DSR transmission function includes: deconfiguring the transmission of the DSR of the terminal, releasing the transmission of the DSR of the terminal, or disabling the terminal from transmitting the DSR.

In the above embodiments, the first information may indicate the activation or deactivation of the transmission of the DSR of the terminal, so that a mechanism that the network device activates or deactivates the DSR transmission function through configuration may be realized, and thus the network device and the terminal have a consistent understanding of activating or deactivating the transmission of the DSR.

In combination with some embodiments of the first aspect, in some embodiments, the DSR includes at least one of: a data amount of first characteristic data, where the first characteristic data is a subset of data to be transmitted by the terminal; or, time information, where the time information indicates time until the data to be transmitted is discarded.

In the above embodiments, the DSR includes the data amount of the first characteristic data and/or the time information, and may report the data amount of the data that needs to be urgently scheduled and/or remaining time, so as to meet the needs of emergency scheduling.

In combination with some embodiments of the first aspect, in some embodiments, transmitting the first information includes at least one of: transmitting a first radio resource control (RRC) signaling, where the first RRC signaling includes the first information; or, transmitting a media access control (MAC) control element (CE), where the MAC CE includes the first information.

In the above embodiments, the first information may be transmitted through the RRC signaling or the MAC CE, so that the RRC signaling or the MAC CE may be reused to save signaling overhead.

In combination with some embodiments of the first aspect, in some embodiments, in a case that the first information is configured to instruct the terminal to cancel the transmission of the DSR, before transmitting the first information, the method further includes: transmitting by the network device configuration information to the terminal via a second RRC signaling, where the configuration information is configured for the terminal to transmit the DSR.

In the above embodiments, the configuration information may be transmitted through the RRC signaling to inform the terminal to report the DSR, and the first information may be transmitted through the MAC CE to inform the terminal to cancel the transmission of the DSR, so that the DSR to be transmitted (or the triggered DSR) may be canceled.

In combination with some embodiments of the first aspect, in some embodiments, a first field of the MAC CE indicates: activating the DSR transmission function, or deactivating the DSR transmission function.

In the above embodiments, the network device may instruct the terminal to activate or deactivate the transmission of the DSR through different values in in field of the MAC CE, which may save signaling overhead or save the fields of the MAC CE, so that the MAC CE has more remaining fields to implement other functions.

In combination with some embodiments of the first aspect, in some embodiments, in a case that the first information is configured to instruct the terminal to deactivate the DSR transmission function, at least one of the following is triggered: canceling the transmission of the DSR; canceling transmission of a scheduling request (SR); or, canceling a random access channel (RACH) procedure.

In the above embodiments, in a case that the network device deactivates the DSR transmission function, the cancelation of the transmission of the DSR, the cancelation of the transmission of the SR and/or the cancelation of the RACH procedure may be triggered, thus saving unnecessary waste of resources.

In combination with some embodiments of the first aspect, in some embodiments, in a case that the first information indicates that the transmission of the DSR is canceled, transmission of an SR and/or an RACH procedure are further canceled.

In the above embodiments, in a case that the transmission of the DSR is canceled, the transmission of the SR and/or the RACH procedure may be further canceled. Thus, after canceling the transmission of the DSR, it is unnecessary to transmit the SR triggered due to DSR transmission failure and/or it is unnecessary to trigger the RACH procedure triggered due to DSR transmission failure, thus saving unnecessary waste of resources.

In combination with some embodiments of the first aspect, in some embodiments, in a case that the transmission of the SR is canceled, a prohibition timer of the SR is stopped, and/or, in a case that the transmission of the DSR is canceled, a timer associated with the DSR is stopped.

In the above embodiments, when the transmission of the SR is canceled, the prohibition timer of the SR may be stopped, so that the terminal does not need to retransmit the SR after the prohibition timer of the SR expires when the SR fails to be transmitted, and/or when the transmission of the DSR is canceled, the timer associated with the DSR may be stopped, so that the terminal does not need to run the timer associated with the DSR, thus saving system resources.

In a second aspect, embodiments of the present disclosure provide an information processing method, and the method includes: receiving by a terminal first information transmitted by a network device, where the first information is configured to instruct the terminal to transmit a DSR or cancel transmission of a DSR.

In combination with some embodiments of the second aspect, in some embodiments, the first information indicates one of: activating a DSR transmission function; or, deactivating the DSR transmission function, where activating the DSR transmission function includes: configuring the terminal to transmit the DSR or enabling the terminal to transmit the DSR; and deactivating the DSR transmission function includes: deconfiguring the transmission of the DSR of the terminal, releasing the transmission of the DSR of the terminal, or disabling the terminal from transmitting the DSR.

In combination with some embodiments of the second aspect, in some embodiments, the DSR includes at least one of: a data amount of first characteristic data, where the first characteristic data is a subset of data to be transmitted by the terminal; or, time information, where the time information indicates time until the data to be transmitted is discarded.

In combination with some embodiments of the second aspect, in some embodiments, receiving the first information transmitted by the network device includes at least one of: receiving a first RRC signaling transmitted by the network device, where the first RRC signaling includes the first information; or, receiving an MAC CE transmitted by the network device, where the MAC CE includes the first information.

In combination with some embodiments of the second aspect, in some embodiments, in a case that the first information is configured to instruct the terminal to cancel the transmission of the DSR, before receiving the MAC CE transmitted by the network device, the method further includes: receiving by the terminal a second RRC signaling transmitted by the network device, where the second RRC signaling includes configuration information; and the configuration information is configured for the terminal to transmit the DSR.

In combination with some embodiments of the second aspect, in some embodiments, a first field of the MAC CE is configured to: activate a DSR transmission function; or deactivate a DSR transmission function.

In combination with some embodiments of the second aspect, in some embodiments, in a case that the first information is configured to instruct the terminal to deactivate the DSR transmission function, at least one of the following is triggered: canceling the transmission of the DSR; canceling transmission of an SR; and canceling an RACH procedure.

In combination with some embodiments of the second aspect, in some embodiments, the method further includes at least one of: determining to cancel the transmission of the DSR based on the first information; determining to cancel the transmission of the SR based on the first information; or, determining to cancel the RACH procedure based on the first information.

In combination with some embodiments of the second aspect, in some embodiments, in a case that the first information indicates that the transmission of the DSR is canceled, transmission of an SR and/or an RACH procedure are further canceled.

In combination with some embodiments of the second aspect, in some embodiments, the method further includes at least one of: determining to cancel the transmission of the SR on the basis that the transmission of the DSR is canceled; or, determining to cancel the RACH procedure on the basis that the transmission of the DSR is canceled.

In combination with some embodiments of the second aspect, in some embodiments, the method further includes at least one of: stopping a prohibition timer of the SR in a case that the transmission of the SR is canceled; or, stopping a timer associated with the DSR in a case that the transmission of the DSR is canceled.

In a third aspect, embodiments of the present disclosure provide a network device, and the network device includes: a first transceiver module configured to transmit first information, where the first information is configured for a terminal to transmit a DSR or cancel transmission of a DSR.

In a fourth aspect, embodiments of the present disclosure provide a terminal, and the terminal includes: a second transceiver module configured to receive first information, where the first information is configured for the terminal to transmit a DSR or cancel transmission of a DSR.

In a fifth aspect, embodiments of the present disclosure provide a network device, and the network device includes: one or more processors, where the network device is configured to perform optional implementations of the first aspect.

In a sixth aspect, embodiments of the present disclosure provide a terminal, and the terminal includes: one or more processors, where the terminal is configured to perform optional implementations of the second aspect.

In a seventh aspect, embodiments of the present disclosure provide a communication system, and the communication system includes: a network device and a terminal, where the network device is configured to perform the method according to optional implementations of the first aspect, and the terminal is configured to perform the method according to optional implementations of the second aspect.

In an eighth aspect, embodiments of the present disclosure provide a storage medium, and the storage medium stores instructions, which are configured to, when executed on a communication device, cause the communication device to perform the methods according to optional implementations of the first aspect and/or the second aspect.

In a ninth aspect, embodiments of the present disclosure provide a program product, which is configured to, when executed by a communication device, cause the communication device to perform the methods according to optional implementations of the first aspect and/or the second aspect.

In a tenth aspect, embodiments of the present disclosure provide a computer program, which is configured to, when executed on a computer, cause the computer to perform the information processing methods according to optional implementations of the first aspect and/or the second aspect.

In an eleventh aspect, embodiments of the present disclosure provide a chip or a chip system. The chip or the chip system includes a processing circuit configured to perform the methods according to optional implementations of the first aspect and/or the second aspect.

It may be understood that the above network devices, terminals, communication systems, storage media, program products, computer programs, chips or chip systems are all used to perform the methods provided in the embodiments of the present disclosure. Therefore, for the beneficial effects that they may achieve, reference may be made to the beneficial effects in the corresponding methods, which are not repeated here.

The embodiments of the present disclosure provide an information processing method, a network device, a terminal, a communication system, and a storage medium. In some embodiments, the terms information processing method and communication method may be used interchangeably, the terms information processing device and communication device may be used interchangeably, and the terms information processing system and communication system may be used interchangeably.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, the embodiments may be arbitrarily combined, for example, some or all of the steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "aforesaid", "foregoing", "this", etc., may mean "one and only one", or "one or more", "at least one", etc. For example, when using articles such as "a", "an", "the" in English in translation, the noun after the article may be understood as a singular expression or a plural expression.

In the embodiments of the present disclosure, "a plurality" refers to two or more.

In some embodiments, the terms "at least one", "one or more", "a plurality of", "multiple" and the like may be used interchangeably.

In some embodiments, "at least one of A and B", "A and/or B", "A in a case, B in another case", "A in response to a case, B in response to another case", etc., may include the following technical solutions according to the situation: in some embodiments, A (A is executed independently of B); in some embodiments, B (B is executed independently of A); in some embodiments, selection is made between A and B for execution (A and B are selectively executed); in some embodiments, A and B (both A and B are executed). When there are more branches such as A, B, C, etc., the same applies.

In some embodiments, the recording manner of "A or B" may include the following technical solutions according to the situation: in some embodiments, A (A is executed independently of B); in some embodiments, B (B is executed independently of A); in some embodiments, selection is made between A and B for execution (A and B are selectively executed). When there are more branches such as A, B, C, etc., the same applies.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, in a case that the description object is a "field", the ordinal numbers before the "field" in the "first field" and the "second field" do not limit the position or order between the "fields", and the "first" and "second" do not limit whether the "fields" they modify are in the same message, nor do they limit the order of the "first field" and the "second field". For another example, in a case that the description object is a "level", the ordinal numbers before the "level" in the "first level" and the "second level" do not limit the priority between the "levels". For another example, the number of description objects is not limited by the ordinal number, and may be one or more. Taking the "first device" as an example, the number of "devices" may be one or more. In addition, the objects modified by different prefixes may be the same or different. For example, in a case that the description object is "device", the "first device" and the "second device" may be the same device or different devices, and their types may be the same or different. For another example, in a case that the description object is "information", the "first information" and the "second information" may be the same information or different information, and their contents may be the same or different.

In some embodiments, "including A", "comprising A", "indicating A", and "carrying A" may be interpreted as directly carrying A or indirectly indicating A.

In some embodiments, terms such as "in response to...", "in response to determining...", "in a case that...", "while...", "when...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than", and "below" may be used interchangeably.

In some embodiments, devices, etc. may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as devices included in the network (e.g., access network device, core network device, etc.).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part" and the like may be used interchangeably.

In some embodiments, the terms "terminal", "terminal device", "user equipment (UE)", "user terminal" "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal', "handset", "user agent", "mobile client", "client" and the like may be used interchangeably.

In some embodiments, the access network device, the core network device, or the network device may be replaced with a terminal. For example, the embodiments of the present disclosure may also be applied to a structure which replaces the communication between the access network device, core network device, or network device and the terminal with the communication between a plurality of terminals (for example, device-to-device (D2D), vehicle-to-everything (V2X), etc.). In this case, the terminal may have all or part of the functions of the access network device. In addition, terms such as "uplink" and "downlink" may also be replaced by terms corresponding to the communication between the terminals (for example, "side"). For example, uplink channel, downlink channel, etc. may be replaced by side channel, and uplink, downlink, etc. may be replaced by sidelink.

In some embodiments, the terminal may be replaced by the access network device, the core network device, or the network device. In this case, the access network device, the core network device, or the network device may have all or part of the functions of the terminal.

In some embodiments, obtaining data, information, etc., may comply with the laws and regulations of the country where the obtainment takes place.

In some embodiments, data, information, etc., may be obtained with a user's consent.

In addition, each element, each row, or each column in tables of the embodiments of the present disclosure may be implemented as an independent embodiment, and any combination of any elements, any rows, or any columns may also be implemented as an independent embodiment.

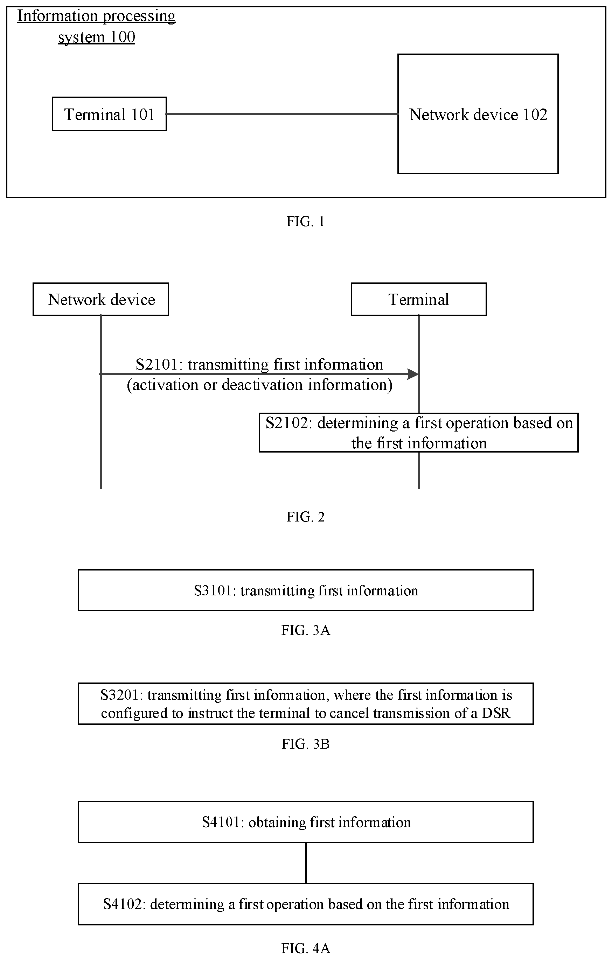

FIG. 1 is a schematic diagram of an information processing system 100 according to an embodiment of the present disclosure. As shown in FIG. 1, the information processing system 100 may include: a terminal 101 and a network device 102.

In some embodiments, the network device 102 may include at least one of an access network device or a core network device.

In some embodiments, the terminal 101 may include at least one of, for example, a mobile phone, a wearable device, an Internet of Things device or terminal, a vehicle with a communication function, a smart vehicle, a tablet computer (Pad), a computer with wireless transmitting and receiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but not limited to this.

In some embodiments, the access network device may be, for example, a node or device that accesses a terminal to a wireless network. The access network device may include at least one of an evolved NodeB (eNB) in a 5G communication system, a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solution of the present disclosure may be applied to an Open RAN architecture. In this case, interfaces between the access network devices or within the access network devices involved in the embodiments of the present disclosure may become internal interfaces of the Open RAN, and procedures and information interactions between these internal interfaces may be implemented through software or programs.

In some embodiments, the access network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

In some embodiments, the core network device may be a device including a first network element, a second network element, etc., or may be a plurality of devices or a group of devices, including all or part of the first network element and the second network element respectively. The network element may be virtual or physical. The core network may include, for example, at least one of an evolved packet core (EPC), a 5G core network (5GCN), and a next generation core (NGC).

It may be understood that the information processing system described in the embodiments of the present disclosure is for the purpose of more clearly illustrating the technical solution of the embodiments of the present disclosure, and does not constitute a limitation on the technical solution provided by the embodiments of the present disclosure. Those skilled in the art may know that with the evolution of the system architecture and the emergence of new business scenarios, the technical solution provided by the embodiments of the present disclosure is also applicable to similar technical problems.

The following embodiments of the present disclosure may be applied to the information processing system 100 shown in FIG. 1, or part of entities thereof, but are not limited thereto. The entities shown in FIG. 1 are examples, and the information processing system may include all or part of the entities in FIG. 1, or may include other entities other than those in FIG. 1, and the number and form of the entities are arbitrary. The connection relationship between the entities is an example. The entities may be connected or disconnected, and the connection therebetween may be in any manner. The connection may be a direct connection or an indirect connection, and may be a wired connection or a wireless connection.

The embodiments of the present disclosure may be applied to long-term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A and 5G) for application.

In some embodiments, in an extended reality (XR) service, data usually has multiple data flows, and its business volume is very large. The XR data flow needs to meet certain delay requirements during transmission, especially some data flows need to arrive at a server for decoding at the same time. The delay of any one of the data flows will cause the joint decoding of multiple data flows to fail. However, the scheduling of the network device is dynamic, and thus, in some cases, even if some data flows belong to low-priority logical channels, if some data packets have not been scheduled for a long time, a buffer status report (BSR) needs to be transmitted to notify the network device as soon as possible. However, at present, the BSR may only be transmitted when high-priority logical channel data arrives, which cannot meet the needs of emergency scheduling. Therefore, it is necessary to consider optimizing the emergency scheduling situation in the XR service.

In some embodiments, reporting of a DSR is introduced. Optionally, the terminal reports the DSR, and the DSR carries information of the delay; and the information of the delay may be that the data packet has not been scheduled for a long time, resulting in remaining time of the data packet being less than a certain threshold. Optionally, the remaining time of the data packet is the time until the packet is discarded, that is, the remaining time is determined according to a discard timer of a packet data convergence protocol (PDCP). Optionally, the threshold may be a remaining time threshold.

In some embodiments, the terminal supports DSR reporting based on a threshold. For example, when the remaining time of a protocol data unit (PDU) or a PDU set is less than a threshold configured by a network (NW), the DSR reporting is triggered. Optionally, the threshold is for each logical channel group (LCG).

In some embodiments, a delay status report (DSR) procedure is configured to provide a delay status of uplink (UL) data to a serving base station (eNB). The DSR includes a remaining time for the UL data; the remaining time is determined according to a PDCP discard timer duration and the amount of data reporting the remaining time, and the PDCP discard timer is associated with a first symbol of a physical uplink shared channel (PUSCH) transmission that transmits the DSR.

In some embodiments, the RRC controls the DSR operation by configuring a remaining time threshold; and the remaining time threshold is a remaining time threshold of UL data configured by the LCG to trigger the DSR.

In some embodiments, an MAC entity triggers the transmission of the DSR when the remaining time of a PDU or a PDU set in the LCG (if configured for the DSR) becomes shorter than its associated remaining time threshold.

FIG. 2 is an interactive schematic diagram of an information processing method according to an embodiment of the present disclosure. As shown in FIG. 2, the information processing method according to the embodiment of the present disclosure is performed by the information processing system 100, and the method includes the following steps.

In step S2101, a network device transmits first information to a terminal.

In some embodiments, the terminal receives the first information transmitted by the network device.

In some embodiments, the network device transmits the first information to the terminal via a dedicated signaling. Optionally, the dedicated signaling may be an RRC signaling or an MAC CE, etc.

In some embodiments, the terminal receives the first information transmitted by the network device through a dedicated signaling.

Optionally, the network device transmits a first RRC signaling to the terminal, where the first RRC signaling includes the first information.

Optionally, the network device transmits an MAC CE to the terminal, where the MAC CE includes the first information.

Optionally, the terminal receives a first RRC signaling transmitted by the network device, and the first RRC signaling includes the first information.

Optionally, the terminal receives an MAC CE transmitted by the network device, where the MAC CE includes the first information.

In some optional embodiments, the network device transmits configuration information to the terminal.

Optionally, the configuration information is configured for the terminal to transmit a DSR.

Optionally, the configuration information is configured to instruct the terminal to transmit a DSR.

Optionally, the name of the configuration information is not limited, and it may be, for example, DSR reporting configuration, DSR reporting indication, etc.

In some embodiments, the network device transmits the configuration information to the terminal via a second RRC signaling.

In some embodiments, the terminal receives configuration information transmitted by the network device via a second RRC signaling. For example, the terminal receives the second RRC signaling transmitted by the network device, and the second RRC signaling includes the configuration information.

Optionally, after the network device transmits the configuration information via the second RRC signaling, it transmits the first information through the MAC CE; and the first information is configured to instruct the terminal to cancel transmission of a DSR.

In some embodiments, the first information is configured for the terminal to transmit a DSR or cancel transmission of a DSR.

In some embodiments, the first information is configured to instruct the terminal to transmit a DSR or cancel transmission of a DSR.

In some embodiments, the first information is configured for the terminal to transmit a DSR or not to transmit a DSR.

In some embodiments, the first information is configured to instruct the terminal to transmit a DSR or not to transmit a DSR.

In some embodiments, the first information indicates: activating a DSR reporting or transmission function, or deactivating a DSR reporting or transmission function.

Optionally, activating the DSR transmission function includes: configuring the terminal to transmit the DSR, or enabling the terminal to transmit the DSR. Here, activating may be configuring or enabling.

Optionally, activating the DSR reporting function includes: configuring the terminal to report the DSR, or enabling the terminal to report the DSR.

Optionally, deactivating the DSR transmission function includes: deconfiguring the transmission of the DSR of the terminal, releasing the transmission of the DSR of the terminal, or disabling the terminal from transmitting the DSR. Here, deactivating may be deconfiguring, releasing, or disabling.

Optionally, deactivating the DSR reporting function includes: deconfiguring the reporting of the DSR of the terminal, releasing the reporting of the DSR of the terminal, or disabling the terminal from reporting the DSR.

Optionally, the DSR includes a data amount of first characteristic data and/or time information. For example, the first characteristic data is a subset of data to be transmitted by the terminal; or, the first characteristic data is a subset of data to be transmitted in a logical channel or a logical channel group; or, the first characteristic data is part of data to be transmitted. For example, the time information indicates time until the data to be transmitted is discarded.

In some embodiments, the first information includes: first indication information or second indication information.

Optionally, the first indication information indicates activation of a DSR reporting or transmission function; and/or, the second indication information indicates deactivation of a DSR reporting or transmission function.

In some embodiments, a first field of the MAC CE indicates activation of a DSR transmission function or deactivation of a DSR transmission function.

Optionally, the first field may be any field in the MAC CE; or, the first field may be a predetermined field of the MAC CE. For example, the predetermined field may be a reserved field or a predefined field of the MAC CE.

Optionally, the first field indicates activation or deactivation of a DSR reporting or transmission function on at least one logical channel group (LCG).

For example, when the first field has a first value, for example, "1", it indicates activation of the DSR reporting or transmission function on the LCG; or, when the first field has a second value, for example, "0", it indicates deactivation of the DSR reporting or transmission function on the LCG. For example, the first field includes one bit; when the bit is "1", it indicates activation of the DSR reporting or transmission function on at least one LCG; or, when the bit is "0", it indicates deactivation of the DSR reporting or transmission function on at least one LCG. For another example, the first field includes two bits; when the two bits are "10", it indicates activation of the DSR reporting or transmission function on a first LCG and deactivation of the DSR reporting or transmission function on a second LCG; or, when the two bits are "00", it indicates deactivation of the DSR reporting or transmission function on a first LCG and deactivation of the DSR reporting or transmission function on a second LCG.

In some embodiments, the name of the first information is not limited, and it may be, for example, activation information, deactivation information, configuration information, deconfiguration information, release information, enabling information, disabling information, information for canceling DSR transmission, information for activating DSR transmission, information for deactivating DSR transmission, etc.

In some embodiments, in a case that the first information is configured to instruct the terminal to deactivate a DSR reporting or transmission function, at least one of the following is triggered: canceling transmission of a DSR, canceling transmission of an SR, and canceling an RACH procedure.

In some embodiments, in a case that the first information is configured to instruct the terminal to deactivate a DSR reporting or transmission function, transmission of a DSR is canceled, and/or, in a case that the first information is configured to instruct the terminal to deactivate a DSR reporting or transmission function, transmission of an SR is canceled, and/or, in a case that the first information is configured to instruct the terminal to deactivate a DSR reporting or transmission function, an RACH procedure is canceled.

In some embodiments, in a case that the first information indicates cancelation of transmission of a DSR, transmission of an SR is canceled.

In some embodiments, in a case that the first information indicates cancelation of transmission of a DSR, an RACH procedure is canceled.

In some embodiments, in a case that the transmission of the SR is canceled, a prohibition timer (ProhibitTimer) of the SR is stopped, and/or, in a case that the transmission of the DSR is canceled, a timer associated with the DSR is stopped. Optionally, the timer associated with the DSR may be a prohibition timer, a retransmission timer and/or a periodic timer. Optionally, the timer associated with the DSR may also be the prohibition timer of the SR.

In some optional embodiments, the network device transmits second information to the terminal.

Optionally, the second information is configured to instruct the terminal to trigger at least one of the following when deactivating a DSR reporting or transmission function: canceling transmission of a DSR, canceling transmission of an SR, or canceling an RACH procedure.

Optionally, the second information is configured to instruct the terminal to cancel transmission of a DSR when deactivating a DSR reporting or transmission function, and/or, the first information is configured to instruct the terminal to cancel transmission of an SR when deactivating a DSR reporting or transmission function, and/or, the first information is configured to instruct the terminal to cancel an RACH procedure when deactivating a DSR reporting or transmission function.

Optionally, the first information and the second information may be transmitted independently.

Optionally, the name of the second information is not limited, and it may be, for example, deactivation information, information for canceling DSR-related operations, etc.

In some optional embodiments, the network device transmits third information to the terminal.

Optionally, the third information indicates cancelation of transmission of an SR in a case that transmission of a DSR is canceled.

Optionally, the third information indicates cancelation of an RACH procedure in a case that transmission of a DSR is canceled.

Optionally, the first information, the second information and the third information may be transmitted independently.

Optionally, the name of the third information is not limited, and it may be, for example, deactivation information, information for canceling DSR-related operations, etc.

In step S2102, the terminal determines a first operation based on the first information.

In some embodiments, the first operation includes not transmitting a DSR.

In some embodiments, the first operation includes at least one of: canceling transmission of a DSR, canceling transmission of an SR, canceling an RACH procedure, or stopping a timer of an SR. Optionally, the first information indicates deactivation of a DSR reporting or transmission function.

In some embodiments, the terminal determines to cancel transmission of a DSR based on the first information. Optionally, the terminal determines that a DSR reporting or transmission function is deactivated based on the first information, and then determines to cancel the transmission of the DSR.

In some embodiments, the terminal determines to cancel transmission of an SR based on the first information. Optionally, the terminal determines that a DSR reporting or transmission function is deactivated based on the first information, and then determines to cancel the transmission of the SR.

In some embodiments, the terminal determines to cancel an RACH procedure based on the first information. Optionally, the terminal determines that a DSR reporting or transmission function is deactivated based on the first information, and then determines to cancel the RACH procedure.

In some embodiments, the terminal determines to cancel transmission of an SR based on cancelation of transmission of a DSR. Optionally, in a case that the terminal determines that the transmission of the DSR is canceled based on the first information, it determines to cancel the transmission of the SR.

In some embodiments, the terminal determines to cancel an RACH procedure based on cancelation of transmission of a DSR. Optionally, in a case that the terminal determines that the transmission of the DSR is canceled based on the first information, it determines to cancel the RACH procedure.

In some embodiments, the terminal stops a prohibition timer of an SR in a case that transmission of an SR is canceled.

In some embodiments, the terminal stops a timer associated with a DSR in a case that transmission of a DSR is canceled.

Optionally, each logical channel may trigger transmission of a DSR and/or an SR; when canceling the transmission of the DSR and/or the SR, the transmission of all DSRs and/or SRs may be canceled, or the transmission of part of DSRs and/or SRs may be canceled. For example, canceling the transmission of part of DSRs includes: canceling the transmission of DSRs of a corresponding logical channel triggering the DSR or a logical channel group to which this logical channel belongs. For example, canceling the transmission of part of SRs includes: canceling the transmission of SRs of a corresponding logical channel triggering the DSR or SR or a logical channel group to which this logical channel belongs. Optionally, the logical channel or the logical channel group to which the logical channel belongs is configured by the network device to deactivate the DSR reporting or transmission function.

Optionally, in a case that the terminal determines that there is no uplink grant resource for uplink transmission, or there is an uplink grant resource but the logical channel multiplexing rule is not satisfied, it is determined that the transmission of the MAC CE including the DSR fails; and the terminal determines that an SR needs to be transmitted to request resources for scheduling the DSR. Here, in a case that the terminal cancels the transmission of the DSR, the SR transmission based on the DSR fails, that is, the transmission of the SR is canceled. Optionally, the SR may be a triggered or pending SR.

Optionally, that the uplink grant resource does not meet the logical channel multiplexing rule may be as follows: the uplink grant resource does not meet a logical channel priority (LCP) mapping rule. For example, that the uplink grant resource does not meet the logical channel multiplexing rule may be as follows: the logical channel data is not allowed to be carried on a certain uplink grant resource. For another example, that the uplink grant resource does not meet the logical channel multiplexing rule may be as follows: the logical channel data is not allowed to be carried on a certain service cell.

Optionally, in a case that the terminal determines that the transmission of the SR fails, the RACH procedure needs to be triggered. Here, in a case that the terminal cancels the transmission of the SR, it determines to cancel the RACH procedure. Optionally, that the terminal determines that the transmission of the SR fails may be as follows: it is determined that there is no valid physical uplink control channel (PUCCH) for transmitting the SR.

Optionally, a prohibition timer and/or a retransmission timer of the SR are configured to retransmit the SR. For example, the terminal may retransmit the SR based on the retransmission timer. For example, in a case that the terminal determines that the SR needs to be retransmitted after the SR is transmitted, it determines to retransmit the SR after the prohibition timer of the SR expires.

Optionally, a periodic timer is configured to periodically transmit the SR. For example, the terminal retransmits the SR based on a predetermined time interval, and the predetermined time interval is a period of the periodic timer.

In some optional embodiments, in a case that the terminal determines that a DSR reporting or transmission function is deactivated, it determines to cancel transmission of a DSR and/or cancel transmission of an SR and/or cancel an RACH procedure. Optionally, that the terminal determines that the DSR reporting or transmission function is deactivated may be as follows: the terminal detects that the DSR reporting or transmission function is deactivated.

In some optional embodiments, in a case that the terminal cancels transmission of a DSR, it determines to cancel transmission of an SR and/or cancel an RACH procedure.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, "acquire", "obtain", "get", "receive", "transmit", "bidirectional transmit", "transmit and/or receive" may be used interchangeably, and may be interpreted as receiving from other entities, obtaining from protocols, obtaining from upper layers, obtaining by self-processing, autonomous implementation, etc.

In some embodiments, terms such as "send", "emit", "report", "issue", "transmit", "bidirectional transmit", "transmit and/or receive" may be used interchangeably.

In some embodiments, terms such as "specific", "preset", "predefine", "set", "indicate", "certain", "any", and "first" may be used interchangeably, and "specific A", "preset A", "predefined A", "set A", "indicated A", "certain A", "any A", and "first A" may be interpreted as A pre-specified in a protocol, etc., or as A obtained through setting, configuration, or indication, etc., and may also be interpreted as specific A, certain A, any A, or first A, etc., but not limited to this.

In some embodiments, the determination or judgment may be performed by a value represented by one bit (0 or 1), by a true or false value (Boolean value) represented by true or false, or by comparison of numerical values (for example, comparison with a predetermined value), but not limited to this.

The information processing method involved in the embodiments of the present disclosure may include at least one of step S2101 to step S2102. For example, step S2101 may be implemented as an independent embodiment; step S2102 may be implemented as an independent embodiment; and the combination of step S2101 and step S2102 may be implemented as an independent embodiment.

In some embodiments, step S2101 may be optional, and this step may be omitted or replaced in different embodiments.

In some embodiments, step S2102 may be optional, and this step may be omitted or replaced in different embodiments.

FIG. 3A is a flowchart of an information processing method according to an embodiment of the present disclosure. As shown in FIG. 3A, the information processing method according to the embodiment of the present disclosure is performed by a network device, and the method includes the following steps.

In step S3101, first information is transmitted.

For optional implementations of step S3101, reference may be made to the optional implementations of step S2101 in FIG. 2 and other related parts in the embodiment involved in FIG. 2, which will not be repeated here.

In some embodiments, the network device transmits the first information to a terminal, but not limited to this, and the first information may also be transmitted to other entities.

The above embodiments may be implemented individually or in combination with each other. For optional implementations, reference may be made to the optional implementations of the steps in FIG. 2, which will not be repeated here.

FIG. 3B is a flowchart of an information processing method according to an embodiment of the present disclosure. As shown in FIG. 3B, the information processing method according to the embodiment of the present disclosure is performed by a network device, and the method includes the following steps.

In step S3201, first information is transmitted, where the first information is configured to instruct a terminal to cancel transmission of a DSR.

For optional implementation of step S3201, reference may be made to the optional implementations of step S2101 in FIG. 2 or step S3101 in FIG. 3A, and other related parts in the embodiments involved in FIG. 2 and FIG. 3A, which will not be repeated here.

In some optional embodiments, the first information is configured to instruct the terminal to transmit the DSR.

In some embodiments, the first information indicates one of: activating a DSR transmission function; or, deactivating the DSR transmission function, where activating the DSR transmission function includes: configuring the terminal to transmit the DSR or enabling the terminal to transmit the DSR; and deactivating the DSR transmission function includes: deconfiguring the transmission of the DSR of the terminal, releasing the transmission of the DSR of the terminal, or disabling the terminal from transmitting the DSR.

In some embodiments, the DSR includes at least one of: a data amount of first characteristic data, where the first characteristic data is a subset of data to be transmitted by the terminal; or, time information, where the time information indicates time until the data to be transmitted is discarded.

In some embodiments, transmitting the first information includes at least one of: transmitting a first RRC signaling, where the first RRC signaling includes the first information; or, transmitting an MAC CE, where the MAC CE includes the first information.

In some embodiments, the first information is configured to instruct the terminal to cancel the transmission of the DSR and before transmitting the first information, the method further includes: transmitting by the network device configuration information to the terminal via a second RRC signaling, where the configuration information is configured for the terminal to transmit the DSR.

In some embodiments, a first field of the MAC CE indicates: activating a DSR reporting or transmission function, or deactivating a DSR reporting or transmission function.

In some embodiments, in a case that the first information is configured to instruct the terminal to deactivate a DSR transmission function, at least one of the following is triggered: canceling the transmission of the DSR; canceling transmission of an SR; or canceling an RACH procedure.

In some embodiments, in a case that the first information indicates that the transmission of the DSR is canceled, transmission of an SR and/or an RACH procedure are further canceled.

In some embodiments, in a case that the transmission of the SR is canceled, a prohibition timer of the SR is stopped, and/or, in a case that the transmission of the DSR is canceled, a timer associated with the DSR is stopped. Optionally, the timer associated with the DSR may be: a prohibition timer, a retransmission timer and/or a periodic timer. Optionally, the timer associated with the DSR may also be the prohibition timer of the SR.

The above embodiments may be implemented individually or in combination with each other. For optional implementations, reference may be made to the optional implementations of the steps in FIG. 2 and FIG. 3A, which will not be repeated here.

FIG. 4A is a flowchart of an information processing method according to an embodiment of the present disclosure. As shown in FIG. 4A, the information processing method according to the embodiment of the present disclosure is performed by a terminal, and the method includes the following steps.

In step S4101, first information is obtained.

For optional implementations of step S4101, reference may be made to the optional implementation of step S2101 in FIG. 2 and other related parts in the embodiment involved in FIG. 2, which will not be repeated here.

In some embodiments, the terminal obtains the first information transmitted by a network device, but not limited thereto, and the terminal may also receive the first information transmitted by other entities.

In some embodiments, the terminal obtains the first information specified by a protocol.

In some embodiments, the terminal obtains the first information from an upper layer. For example, the terminal obtains the first information from an RRC layer.

In some embodiments, the terminal performs processing to obtain the first information.

In some embodiments, step S4101 is omitted, and the terminal autonomously implements a function indicated by the first information, or the above function is default.

In step S4102, a first operation is determined based on the first information.

For optional implementations of step S4102, reference may be made to the optional implementations of step S2102 in FIG. 2 and other related parts in the embodiment involved in FIG. 2, which will not be repeated here.

In some embodiments, the terminal determines to cancel transmission of a DSR, cancel transmission of an SR and/or cancel an RACH procedure based on the first information.

In some embodiments, transmission of an SR is canceled in a case that the terminal determines to cancel transmission of a DSR based on the first information, and/or an RACH procedure is canceled in a case that the terminal determines to cancel transmission of a DSR based on the first information.

In some embodiments, the terminal stops a prohibition timer of an SR when canceling transmission of the SR.

In some embodiments, the terminal stops a timer associated with a DSR when canceling transmission of the DSR.

The information processing method involved in embodiments of the present disclosure may include at least one of step S4101 to step S4102. For example, step S4101 may be implemented as an independent embodiment; step S4102 may be implemented as an independent embodiment; and the combination of step S4101 and step S4102 may be implemented as an independent embodiment.

In some embodiments, step S4101 may be optional, and this step may be omitted or replaced in different embodiments.

In some embodiments, step S4102 may be optional, and this step may be omitted or replaced in different embodiments.

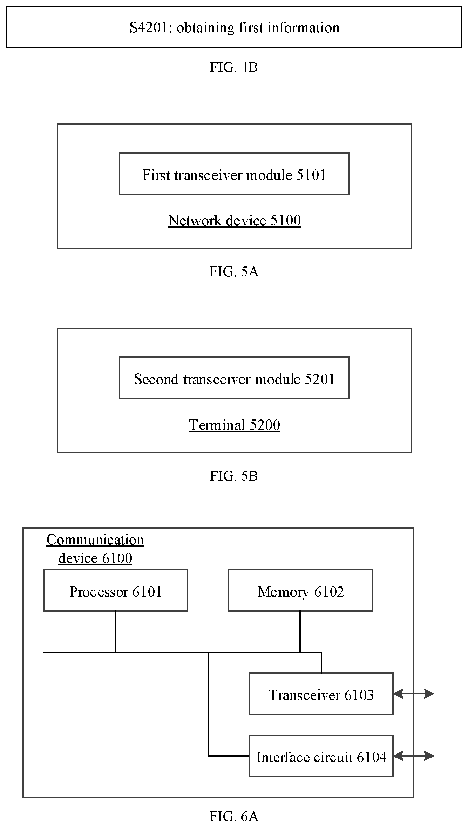

FIG. 4B is a flowchart of an information processing method according to an embodiment of the present disclosure. As shown in FIG. 4B, the information processing method according to the embodiment of the present disclosure is performed by a terminal, and the method includes the following steps.

In step S4201, first information is obtained.

For optional implementations of step S4201, reference may be made to the optional implementations of step S2101 in FIG. 2 or step S4101 in FIG. 4A, and other related parts in the embodiments involved in FIG. 2 and FIG. 4A, which will not be repeated here.

In some embodiments, the first information is configured to instruct the terminal to transmit a DSR or cancel transmission of a DSR.

In some embodiments, the first information indicates one of: activating a DSR transmission function; or, deactivating the DSR transmission function, where activating the DSR transmission function includes: configuring the terminal to transmit the DSR or enabling the terminal to transmit the DSR; and deactivating the DSR transmission function includes: deconfiguring the transmission of the DSR of the terminal, releasing the transmission of the DSR of the terminal, or disabling the terminal from transmitting the DSR.

In some embodiments, the DSR includes at least one of: a data amount of first characteristic data, where the first characteristic data is a subset of data to be transmitted by the terminal; or, time information, where the time information indicates time until the data to be transmitted is discarded.

In some embodiments, receiving the first information includes at least one of: receiving a first RRC signaling transmitted by a network device, where the first RRC signaling includes the first information; or, receiving an MAC CE transmitted by the network device, where the MAC CE includes the first information.

In some embodiments, the first information is configured to instruct the terminal to cancel transmission of a DSR, and before receiving the first information, the method further includes: receiving a second RRC signaling transmitted by a network device, where the second RRC signaling includes configuration information; and the configuration information is configured for the terminal to transmit the DSR.

In some embodiments, a first field of the MAC CE is configured to: activate a DSR reporting or transmission function, or deactivate a DSR reporting or transmission function.

In some embodiments, in a case that the first information is configured to instruct the terminal to deactivate a DSR transmission function, at least one of the following is triggered: canceling transmission of a DSR; canceling transmission of an SR; or canceling an RACH procedure.

In some embodiments, the method further includes at least one of: determining to cancel transmission of a DSR based on the first information; determining to cancel transmission of an SR based on the first information; or, determining to cancel an RACH procedure based on the first information.

In some embodiments, in a case that the first information indicates that transmission of a DSR is canceled, transmission of an SR and/or an RACH procedure are further canceled.

In some embodiments, the method further includes at least one of: determining to cancel transmission of an SR based on cancelation of transmission of a DSR; or, determining to cancel an RACH procedure based on cancelation of transmission of a DSR.

In some embodiments, the method further includes: stopping a prohibition timer of an SR in a case that transmission of the SR is canceled, and/or, stopping a timer associated with a DSR in a case that transmission of the DSR is canceled. Optionally, the timer associated with the DSR may be at least one of: a prohibition timer, a retransmission timer, or a periodic timer.

The above embodiments may be implemented individually or in combination with each other. For optional implementations, reference may be made to the optional implementations of the steps in FIG. 2 and FIG. 4A, which will not be repeated here.

Embodiments of the present disclosure relate to an information processing method, which includes the following steps.

In some embodiments, a network device determines to activate or deactivate a DSR reporting or transmission function of a terminal.

Optionally, when the terminal detects that a specific data packet or a set of specific data packets exists in a logical channel (LC) or a logical channel group (LCG), and determines that the remaining time of the specific data packet or the set of specific data packets is less than a predetermined threshold, it may report or transmit a DSR. The specific data packet or the set of specific data packets may be considered as first characteristic data; and the DSR may carry a data amount of the first characteristic data.

Optionally, activation may mean configuration, or enabling, etc.; and deactivation may mean deconfiguration, release, or disabling, etc.

In some embodiments, the network device notifies the terminal through a dedicated signaling to activate or deactivate the DSR reporting or transmission function.

Optionally, the network device activates or deactivates the DSR reporting or transmission function of the terminal a through an RRC signaling. Here, the RRC signaling is the first RRC signaling in the previous embodiments.

Optionally, the network device activates or deactivates the DSR reporting or transmission function of the terminal through an MAC CE. Here, before transmitting the MAC CE, the network device transmits configuration information in advance in an RRC signaling to instruct the terminal to report or transmit a DSR. Here, the RRC signaling is the second RRC signaling in the previous embodiments.

Optionally, a field of the MAC CE indicates whether an LCG activates or deactivates the DSR reporting or transmission function of the terminal. For example, a value of this field is "1", which indicates activation of the DSR reporting or transmission function; and the value of this field is "0", which indicates deactivation of the DSR reporting or transmission function. Here, this field may be the first field in the previous embodiments.

In some embodiments, when the network device instructs the terminal to deactivate the DSR reporting or transmission function, a triggered DSR and/or SR and/or RACH procedure may be canceled. Since the DSR reporting or transmission function is no longer needed, the already triggered DSR and/or SR and/or RACH procedure may be canceled, thus reducing unnecessary reporting by the terminal.

Optionally, the network device activates or deactivates the DSR reporting or transmission function of the terminal through explicit indication. For example, the network device may instruct the terminal to activate or deactivate the DSR reporting or transmission function by means of an RRC signaling or an MAC CE.

Optionally, the network device activates or deactivates the DSR reporting or transmission function of the terminal through implicit indication.

Optionally, when the RRC signaling configures the DSR reporting or transmission function to be deactivated, the transmission of the DSR is canceled. Since the DSR reporting function is no longer needed, the already triggered DSR may be canceled.

Here, when the network device instructs the terminal to deactivate the DSR reporting or transmission function, all or part of triggered DSRs may be canceled. Canceling the triggered DSRs may be as follows: in a case that the DSR transmission function on a logical channel associated with transmission of the triggered DSRs or a logical channel group to which this logical channel belongs is deactivated, the DSRs triggered by the logical channel or the logical channel group are canceled. For other logical channels or logical channel groups, in a case that the DSR reporting or transmission function is not deactivated, the transmission of the DSR is not affected.

Optionally, when the RRC signaling configures the DSR reporting or transmission function to be deactivated, transmission of an SR is canceled. Since the DSR reporting function is no longer needed, the already triggered DSR may be canceled. In a case that the already triggered DSR triggers an SR again, the SR is also canceled.

Here, when the network device instructs the terminal to deactivate the DSR reporting or transmission function, all or part of pending SRs may be canceled. Canceling part of pending SRs may be as follows: in a case that the DSR transmission function of a logical channel associated with the triggered SR or a logical channel group to which this logical channel belongs is deactivated, the SRs triggered by the logical channel or the logical channel group is canceled. For other logical channels or logical channel groups, in a case that the DSR reporting or transmission function is not deactivated, the transmission of the SR is not affected.

Optionally, when there is no uplink grant resource for uplink transmission, or although there is an uplink grant resource but a logical channel multiplexing rule is not satisfied, resulting in failure of transmission of the MAC CE for the DSR, the DSR may trigger the transmission of the SR.

Optionally, when the network device instructs the terminal to deactivate the DSR reporting or transmission function, and if an SR is triggered during a DSR reporting or transmission procedure, transmission of the SR is canceled. The cancelation of the transmission of the SR may include: canceling transmission of a pending SR and stopping a prohibition timer of the SR (if the prohibition timer is running).

Optionally, in a case that the SR is triggered during the DSR reporting procedure, but there is no valid PUCCH resource to transmit the SR, a RACH procedure is triggered.

Optionally, when the network device instructs the terminal to deactivate the DSR reporting or transmission function, and if an SR is triggered during a DSR reporting procedure, and the SR triggers an RACH procedure, the triggered RACH procedure is canceled.

Optionally, the cancelation of the triggered RACH procedure may be as follows: due to cancelation of a pending SR corresponding to the DSR, an MAC entity may cancel an ongoing RACH procedure (if there is such RACH procedure). For example, the MAC entity may stop the RACH procedure corresponding to the pending SR, and the trigging of the SR is caused by the triggering of the DSR.

In some embodiments, when the network device instructs the terminal to deactivate the DSR reporting or transmission function, a triggered DSR may be canceled; and the cancelation of the DSR may cause a pending SR and/or an RACH procedure to be canceled.

Here are some embodiments.

### Embodiment 1

Optionally, when a network device instructs a terminal to deactivate a DSR reporting or transmission function (for example, an RRC configuration deactivates the DSR reporting or transmission function), transmission of a DSR is canceled.

### Embodiment 2

Optionally, when a DSR that triggers an SR is canceled, transmission of a triggered or pending SR corresponding to the DSR is canceled, and a prohibition timer of the SR is stopped (if the prohibition timer is running).

### Embodiment 3

Optionally, when a network device instructs a terminal to deactivate a DSR reporting or transmission function (for example, an RRC configuration deactivates the DSR reporting or transmission function), transmission of a triggered or pending SR corresponding to the DSR is canceled, and a prohibition timer of the SR is stopped (if the prohibition timer is running).

### Embodiment 4

Optionally, when a DSR corresponding to an SR that triggers an RACH procedure is canceled, an MAC entity may cancel an ongoing RACH procedure.

In some embodiments, the MAC entity cancels the RACH procedure. Here, the RACH procedure is initiated due to the SR triggered for transmitting the DSR, is initiated by the MAC entity prior to the MAC PDU assembly, and has no valid PUCCH resources configured.

Optionally, if the DSR corresponding to the SR that triggers the RACH procedure has been canceled, or when the network device instructs the terminal to deactivate a DSR reporting or transmission function (for example, an RRC configuration deactivates the DSR reporting or transmission function), the MAC entity cancels (if any) the ongoing RACH procedure.

### Embodiment 5

Optionally, when a DSR is canceled, a timer associated with the DSR is stopped (if the timer associated with the DSR is started during a DSR transmission procedure, such as a retransmission timer, a periodic transmission timer or a prohibition timer, the timer is stopped).

### Embodiment 6

In some embodiments, canceling DSRs may be canceling all or part of triggered DSRs.

In some embodiments, canceling part of the DSRs may be as follows: in a case that a DSR transmission function on a logical channel associated with triggering DSR transmission or a logical channel group to which this logical channel belongs is deactivated, the DSRs triggered by the logical channel or the logical channel group are canceled. That is, only when the DSR reporting or transmission function of the logical channel or the logical channel group is deactivated by the network device, the DSRs triggered by the logical channel or the logical channel group are canceled. For other logical channels or logical channel groups, in a case that the DSR reporting or transmission function is not deactivated, the transmission of the DSR is not affected.

For example, in a case that at least one logical channel of LCG1 and at least one logical channel of LCG2 both trigger DSRs, when the network device instructs the terminal to deactivate the DSR reporting or transmission function for LCG1, the DSRs triggered by the logical channel of LCG1 may be canceled; and when the DSR reporting or transmission function of other LCGs (such as LCG2) is not deactivated, the transmission of the DSR triggered by the logical channel of LCG2 is not affected.

### Embodiment 7

Optionally, when a DSR that triggers an SR is canceled, transmission of a triggered or pending SR is canceled, and a prohibition timer of the SR is stopped (if the prohibition timer is running). In this case, canceling the triggered or pending SR may be canceling all or part of the triggered (or pending) SRs.

Here, canceling part of the triggered or pending SRs may be as follows: in a case that a DSR transmission function of a logical channel associated with the triggered SR or a logical channel group to which this logical channel belongs is deactivated, the SRs triggered by the logical channel or the logical channel group are canceled. That is, only when the DSR reporting or transmission function of the logical channel or the logical channel group is deactivated by the network device, the SRs triggered by the logical channel or the logical channel group are canceled. For other logical channels or logical channel groups, in a case that the DSR reporting or transmission function is not deactivated, the transmission of the SR is not affected.

For example, in a case that at least one logical channel of LCG1 and at least one logical channel of LCG2 both trigger SRs (i.e., there are pending SRs), when the network device instructs the terminal to deactivate the DSR reporting or transmission function for LCG1, the SRs triggered by the logical channel of LCG1 (i.e., there are pending SRs) may be canceled; and when the DSR reporting or transmission function of other LCGs (such as LCG2) is not deactivated, the transmission of the SR triggered by the logical channel of LCG2 is not affected.

In the embodiments of the present disclosure, part or all of the steps and their optional implementations may be arbitrarily combined with part or all of the steps in other embodiments, and may also be arbitrarily combined with optional implementations of other embodiments.

Embodiments of the present disclosure further provide a device for implementing any of the above methods. For example, a device is provided, and the device includes a unit or a module for implementing each step performed by the terminal in any of the above methods. For another example, another device is also provided, and the device includes a unit or a module for implementing each step performed by the network device (such as an access network device, a core network function node, a core network device, etc.) in any of the above methods.

It should be understood that the division of the units in the above devices is only a division of logical functions, and in actual implementations, they may be fully or partially integrated into one physical entity, or they may be physically separated. In addition, the units in the devices may be implemented in the form of a processor calling software. For example, the device includes a processor, the processor is connected to a memory, the memory stores computer instructions, and the processor calls computer instructions stored in the memory to implement any of the above methods or implement the functions of the above units of the device. The processor is, for example, a general-purpose processor, such as a central processing unit (CPU) or a microprocessor, and the memory is a memory inside the device or a memory outside the device. Alternatively, the units in the device may be implemented in the form of hardware circuits, and the functions of some or all of the units may be realized by designing the hardware circuits. The above hardware circuits may be understood as one or more processors. For example, in an implementation, the above hardware circuit is an application-specific integrated circuit (ASIC), and the functions of some or all of the above units are realized by designing logical relationships of elements in the circuit. For another example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units. All units of the above device may be realized in the form of the processor calling software, or in the form of hardware circuits, or part in the form of the processor calling software, and the rest in the form of hardware circuits.

In the embodiments of the present disclosure, the processor is a circuit with a signal processing capability. In an implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit, and the logical relationship of the hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the procedure of the processor loading a configuration document to implement the hardware circuit configuration may be understood as the procedure of the processor loading instructions to implement the functions of some or all of the above units. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 5A is a block diagram of a network device 5100 according to an embodiment of the present disclosure. As shown in FIG. 5A, the network device 5100 includes: a first transceiver module 5101. In some embodiments, the first transceiver module 5101 is configured to transmit first information. Optionally, the first transceiver module 5101 is configured to perform at least one of the steps of receiving and/or transmitting (such as step S2101, but not limited to this) performed by the network device in any of the above methods, which are not repeated here.

FIG. 5B is a block diagram of a terminal 5200 according to an embodiment of the present disclosure. As shown in FIG. 5B, the terminal 5200 includes: a second transceiver module 5201. In some embodiments, the second transceiver module 5201 is configured to receive first information. Optionally, the second transceiver module 5201 is configured to perform at least one of the steps of receiving and/or transmitting (such as step S2101, but not limited to this) performed by the terminal in any of the above methods, which are not repeated here. Optionally, the terminal 5200 also includes a processing module; and the processing module is configured to perform at least one of the steps of processing (such as step S2102, but not limited to this) performed by the terminal in any of the above methods, which are not repeated here.

FIG. 6A is a block diagram of a communication device 6100 according to an embodiment of the present disclosure. The communication device 6100 may be a network device (e.g., an access network device, a core network device), or a terminal, etc., or a chip, a chip system, or a processor, etc. that supports the network device to perform any of the above methods, or a chip, a chip system, or a processor, etc. that supports the terminal to perform any of the above methods. The communication device 6100 may be configured to perform the method described in the above method embodiments, and for details, reference may be made to the descriptions in the above method embodiments.

As shown in FIG. 6A, the communication device 6100 includes one or more processors 6101. The processor 6101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The processor 6101 is configured to call instructions to cause the communication device 6100 to perform any of the above methods.

In some embodiments, the communication device 6100 further includes one or more memories 6102 for storing instructions. Optionally, all or part of the memories 6102 may also be located outside the communication device 6100.

In some embodiments, the communication device 6100 further includes one or more transceivers 6103. When the communication device 6100 includes one or more transceivers 6103, the transceiver 6103 performs at least one of the communication (such as transmitting and/or receiving) steps in the above methods, and the processor 6101 performs at least one of the other steps.

In some embodiments, the transceiver may include a receiver and a transmitter, and the receiver and the transmitter may be separate or integrated. Optionally, the terms such as transceiver, transceiver unit, transceiving machine, transceiver circuit, etc. may be used interchangeably, the terms such as transmitter, transmitting unit, transmitting machine, transmitting circuit, etc. may be used interchangeably, and the terms such as receiver, receiving unit, receiving machine, receiving circuit, etc. may be used interchangeably.

Optionally, the communication device 6100 further includes one or more interface circuits 6104, which are connected to the memory 6102. The interface circuit 6104 may be configured to receive signals from the memory 6102 or other devices, and may be configured to transmit signals to the memory 6102 or other devices. For example, the interface circuit 6104 may read instructions stored in the memory 6102 and transmit the instructions to the processor 6101.

The communication device 6100 described in the above embodiment may be a network device or a terminal, but the scope of the communication device 6100 described in the present disclosure is not limited thereto, and the structure of the communication device 6100 may not be limited by FIG. 6A. The communication device may be an independent device or may be part of a large device. For example, the communication device may be: (1) an independent integrated circuit (IC), or a chip, or a chip system or subsystem; (2) a collection of one or more ICs, optionally, the above IC collection may also include a storage component for storing data, computer programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

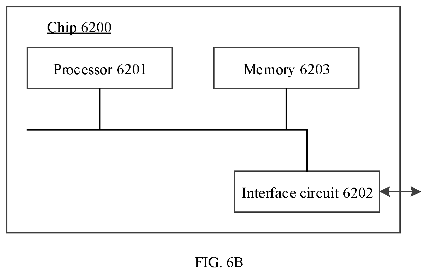

FIG. 6B is a block diagram of a chip 6200 according to an embodiment of the present disclosure. In a case that the communication device 6100 may be a chip or a chip system, reference may be made to the schematic diagram of the chip 6200 shown in FIG. 6B, but the present disclosure is not limited thereto.

The chip 6200 includes one or more processors 6201, and the chip 6200 is configured to perform any of the above methods.

In some embodiments, the chip 6200 further includes one or more interface circuits 6202, which are connected to a memory 6203. The interface circuit 6202 may be configured to receive signals from the memory 6203 or other devices, and the interface circuit 6202 may be configured to transmit signals to the memory 6203 or other devices. For example, the interface circuit 6202 may read instructions stored in the memory 6203 and transmit the instructions to the processor 6201.

In some embodiments, the interface circuit 6202 performs at least one of the communication (such as sending and/or receiving) steps in the above methods, and the processor 6201 performs at least one of the other steps.

In some embodiments, terms such as interface circuit, interface, transceiver pin, and transceiver may be used interchangeably.

In some embodiments, the chip 6200 further includes one or more memories 6203 for storing instructions. Optionally, all or part of the memories 6203 may be located outside the chip 6200.

The present disclosure further provides a storage medium, on which instructions are stored, and when the instructions are executed on the communication device 6100, the communication device 6100 is caused to execute any of the above methods. Optionally, the storage medium is an electronic storage medium. Optionally, the storage medium is a computer-readable storage medium, but is not limited to this, and it may also be a storage medium readable by other devices. Optionally, the storage medium may be a non-transitory storage medium, but is not limited to this, and it may also be a transitory storage medium.

The present disclosure further provides a program product, which, when executed by the communication device 6100, causes the communication device 6100 to perform any of the above methods. Optionally, the program product is a computer program product.

The present disclosure further provides a computer program, which, when executed on a computer, causes the computer to perform any one of the above methods.

## Claims

1. An information processing method, comprising:
transmitting by a network device first information to a terminal, wherein the first information is configured to instruct the terminal to transmit a delay status report (DSR) or cancel transmission of a DSR.

2. The method according to claim 1, wherein the first information indicates one of:
activating a DSR transmission function, wherein activating the DSR transmission function comprises: configuring the terminal to transmit the DSR or enabling the terminal to transmit the DSR; or
deactivating the DSR transmission function, wherein deactivating the DSR transmission function comprises: deconfiguring the transmission of the DSR of the terminal, releasing the transmission of the DSR of the terminal, or disabling the terminal from transmitting the DSR.

3. The method according to claim 1 or 2, wherein the DSR comprises at least one of:
a data amount of first characteristic data, wherein the first characteristic data is a subset of data to be transmitted by the terminal; or
time information, wherein the time information indicates time until the data to be transmitted is discarded.

4. The method according to any one of claims 1 to 3, wherein transmitting the first information comprises at least one of:
transmitting a first radio resource control (RRC) signaling, wherein the first RRC signaling comprises the first information; or
transmitting a media access control (MAC) control element (CE), wherein the MAC CE comprises the first information.

5. The method according to any one of claims 1 to 4, wherein in a case that the first information is configured to instruct the terminal to cancel the transmission of the DSR, before transmitting the first information, the method further comprises:
transmitting by the network device configuration information to the terminal via a second RRC signaling, wherein the configuration information is configured for the terminal to transmit the DSR.

6. The method according to claim 4, wherein a first field of the MAC CE indicates one of:
activating a DSR transmission function; or
deactivating a DSR transmission function.

7. The method according to any one of claims 1 to 6, wherein in a case that the first information is configured to instruct the terminal to deactivate a DSR transmission function, at least one of the following is triggered:
canceling the transmission of the DSR;
canceling transmission of a scheduling request (SR); or
canceling a random access channel (RACH) procedure.

8. The method according to any one of claims 1 to 6, wherein in a case that the first information indicates that the transmission of the DSR is canceled, transmission of an SR and/or an RACH procedure are further canceled.

9. The method according to claim 7 or 8, wherein in a case that the transmission of the SR is canceled, a prohibition timer of the SR is stopped, and/or, in a case that the transmission of the DSR is canceled, a timer associated with the DSR is stopped.

10. An information processing method, comprising:
receiving by a terminal first information transmitted by a network device, wherein the first information is configured to instruct the terminal to transmit a delay status report (DSR) or cancel transmission of a DSR.

11. The method according to claim 10, wherein the first information indicates one of:
activating a DSR transmission function, wherein activating the DSR transmission function comprises: configuring the terminal to transmit the DSR or enabling the terminal to transmit the DSR; or
deactivating the DSR transmission function, wherein deactivating the DSR transmission function comprises: deconfiguring the transmission of the DSR of the terminal, releasing the transmission of the DSR of the terminal, or disabling the terminal from transmitting the DSR.

12. The method according to claim 10 or 11, wherein the DSR comprises at least one of:
a data amount of first characteristic data, wherein the first characteristic data is a subset of data to be transmitted by the terminal; or
time information, wherein the time information indicates time until the data to be transmitted is discarded.

13. The method according to any one of claims 10 to 12, wherein receiving the first information transmitted by the network device comprises at least one of:
receiving a first radio resource control (RRC) signaling transmitted by the network device, wherein the first RRC signaling comprises the first information; or
receiving a media access control (MAC) control element (CE) transmitted by the network device, wherein the MAC CE comprises the first information.

14. The method according to any one of claims 10 to 13, wherein in a case that the first information is configured to instruct the terminal to cancel the transmission of the DSR, before receiving the first information transmitted by the network device, the method further comprises:
receiving by the terminal a second RRC signaling transmitted by the network device, wherein the second RRC signaling comprises configuration information; and the configuration information is configured for the terminal to transmit the DSR.

15. The method according to claim 13, wherein a first field of the MAC CE indicates one of:
activating a DSR transmission function; or
deactivating a DSR transmission function.

16. The method according to any one of claims 10 to 15, wherein in a case that the first information is configured to instruct the terminal to deactivate a DSR transmission function, at least one of the following is triggered:
canceling the transmission of the DSR;
canceling transmission of a scheduling request (SR); or
canceling a random access channel (RACH) procedure.

17. The method according to claim 16, further comprising at least one of:
determining to cancel the transmission of the DSR based on the first information;
determining to cancel the transmission of the SR based on the first information; or
determining to cancel the RACH procedure based on the first information.

18. The method according to any one of claims 10 to 15, wherein in a case that the first information indicates that the transmission of the DSR is canceled, transmission of an SR and/or an RACH procedure are further canceled.

19. The method according to claim 18, further comprising at least one of:
determining to cancel the transmission of the SR on the basis that the transmission of the DSR is canceled; or
determining to cancel the RACH procedure on the basis that the transmission of the DSR is canceled.

20. The method according to claim 17 or 19, further comprising at least one of:
stopping a prohibition timer of the SR in a case that the transmission of the SR is canceled; or
stopping a timer associated with the DSR in a case that the transmission of the DSR is canceled.

21. A network device, comprising:
a first transceiver module configured to transmit first information to a terminal, wherein the first information is configured to instruct the terminal to transmit a delay status report (DSR) or cancel transmission of a DSR.

22. A terminal, comprising:
a second transceiver module configured to receive first information transmitted by a network device, wherein the first information is configured to instruct the terminal to transmit a delay status report (DSR) or cancel transmission of a DSR.

23. A network device, comprising:
one or more processors,
wherein the network device is configured to perform the information processing method according to any one of claims 1 to 9.

24. A terminal, comprising:
one or more processors,
wherein the terminal is configured to perform the information processing method according to any one of claims 10 to 20.

25. A communication system, comprising a network device and a terminal, wherein the network device is configured to perform the information processing method according to any one of claims 1 to 9, and the terminal is configured to perform the information processing method according to any one of claims 10 to 20.

26. A storage medium, storing instructions, which are configured to, when executed on a communication device, cause the communication device to perform the information processing method according to any one of claims 1 to 9 or any one of claims 10 to 20.
